# EUROPEAN PATENT APPLICATION

(11) **EP 1 939 506 A1**
(43) Date of publication of application: **02.07.2008**
(21) Application number: 07076129.1
(22) Date of filing: 24.12.2007
(51) Int. Cl.: F16K 41/10, F16K 17/04, F16K 7/16

(54) **Safety membrane valve with antirotation cap**

(30) Priority: 28.12.2006 IT MI20062523
(71) Applicant: WATTS INDUSTRIES ITALIA S.r.l., Bolzano (IT)
(72) Inventor: Molinari, Roberto; c/o Watts Industries Italia S.r.l., Bolzano (IT)
(74) Representative: Raimondi, Margherita

(57) **Abstract**

Safety membrane valve comprising a body (10) with a first union (11) for connection to a pipe to be protected against overpressures and a second discharge union (12), said unions communicating with each other by means of a valve seat (14) coaxial with said first union (11) and an aperture (12a) coaxial with the second union (12); a membrane valve element (20) housed inside a respective seat (13) of the body (10) and movable coaxially with respect to the first union (11) from a closed position, in contact with said seat (14), into an open position raised from said seat (14) for opening thereof; a longitudinal guide bush (30) for said valve element (20); a pressure cap (50) acting on said valve element (20); a spring (40) acting between said bush (30) and said cap (50) so as to press the valve element (20) against the seat (14), said cap (50;150) having outwardly directed tongues (56;156) which extend circumferentially with discontinuity and are resiliently deformable in the radial direction, said tongues being suitable for insertion inside respective annular seats (16;119) of the valve body (10) for axial locking of the cap (50).

## Description

The present invention relates to a safety valve for preventing overpressures in pressurised-fluid supply pipes.

In the art the known safety valves for preventing overpressures in fluid supply pipes comprise a membrane valve element which is pressed resiliently against a seat arranged between an aperture intended to be connected to the pipe to be protected and a discharge aperture.

A safety valve of this type is essentially formed by a body having an inlet union for connection to the pipe to be protected against overpressures and an outlet or discharge union, these two unions being in communication with each other; a valve element seat arranged between said unions and a membrane valve element which co-operates with said seat; a support and guide bush for said membrane valve element; a cap mounted on said body and a pressure spring acting between said cap and said bush.

The spring keeps the membrane valve element pressed against the associated seat and the pressure inside the pipe to be protected against overpressures acts on the membrane valve element subject to the opposing force of the spring until, once a predefined value (calibration pressure) has been exceeded, the pressure of the fluid contained inside the inlet union of the valve prevails over the opposing force of the spring, resulting in raising of the valve element from the seat of the valve which, opening, establishes communication between the inlet union and the outlet union, allowing discharging of the overpressure.

The calibration pressure of the valve is determined by the dimensions of the components and by the intrindic characteristics of the spring.

The existing regulations and maintenance requirements for the valve are such that it is required to provide the valve with a device for manual operation of the valve element, so as to cause manual discharging of the overpressure in order to check that the valve is working properly and keep the sealing seat clean from any depositions.

This manual operation device generally consists of a series of cams which are arranged on a suitable control knob which can be rotationally operated by the user and are able to engage with suitable ribs formed on the cap.

When the knob is rotated in an anti-clockwise direction, the ribs formed on the cap transmit an axial force component onto the cams formed in the knob, causing raising of the knob and therefore displacement of the bush and consequent separation of the valve element.

Rotation of the knob, however, also produces a tangential force component which is transmitted as a result of the action/reaction effect onto the cap. This tangential component is opposed by the frictional force produced by compression of the membrane between cap and body following the assembly operations and exerted between cap, membrane valve element and body.

The greater the opposing force of the spring, the greater is the axial component exerted by the cam in order to be able to perform manual opening of the valve element and consequently a higher calibration setting of the valve produces a greater tangential component to be opposed by means of friction, essentially making manual operation of the knob and therefore the valve difficult.

In addition to this, it is also known that the cap may be assembled with the body either by means of screwing or engagement in the axial direction with radial insertion of special tongues formed on the cap into a groove present in the valve body.

In the first case, a greater screwing torque applied to the cap during assembly results in a greater compression of the membrane, with a consequent increase in the frictional force opposing the tangential component on the cap resulting from manual operation of the valve; this results in a greater rotational resistance of the cap when an unscrewing torque is applied to the latter.

In the second case, the insertion of the cap is performed by pressing the cap into the body (an operation which is faster than screwing and therefore more cost-effective) and the compression of the membrane between body and cap is determined by the geometrical characteristics of the three components (body, cap and membrane valve element) and by the nature of the materials used; the equilibrium between the forces at play results in a limit value for calibration of the valve such that, when exceeded, the tangential component (resulting from manual operation of the valve) applied to the cap is greater than the opposing frictional force, with consequent rotation of the cap together with the knob and unsuccessful manual operation of the valve; in this way the torque applied to the knob is transformed into rotation of the latter instead of opening of the valve, thus resulting in failure to satisfy a fundamental requirement for operation thereof.

The technical problem which is posed, therefore, is to overcome the drawbacks of the known art by providing a valve which is able to ensure correct functioning of the manual operation device even in the case of high calibration pressures, in a manner which is reliable, repeatable and does not require excessive force on the part of the user and which can be achieved by means of low-cost assembly procedures.

These results are achieved according to the present invention by a membrane valve according to the characteristic features of Claim 1.

Further details may be obtained from the following description of a non-limiting example of embodiment of the invention provided with reference to the accompanying drawings in which:

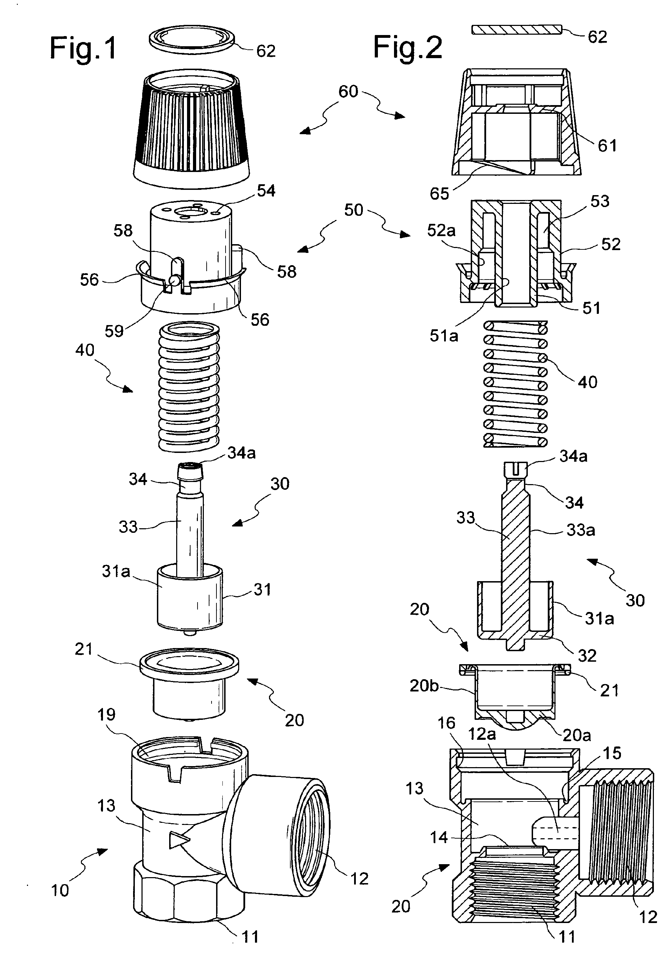

- Figure 1 shows an exploded view of the valve according to the present invention;
- Figure 2 shows an exploded and cross-sectional view of the various components forming the valve;
- Figure 3 shows an axial section through the valve according to the present invention in the assembled condition;
- Figure 4 shows an exploded view of a second embodiment of the valve according to the present invention;
- Figure 5 shows a view of the valve according to Fig. 4 in the assembled condition;
- Figure 6 shows an axial cross-section along the plane indicated by the line VI-VI in Fig. 5; and
- Figure 7 shows a cross-section along the plane indicated by the line VII-VII in Fig. 5.

As shown and assuming for the sake of convenience of description a longitudinal reference axis X-X, the valve according to the invention comprises a valve body 10 which has an inlet union or opening 11, for connection to the pipe (not shown) to be protected against overpressures, an outlet discharge union or opening 12 and a housing 13 for a valve element 20.

The body 10 also forms a valve seat 14 generally consisting of an annular shoulder arranged between the inlet union 11 and the outlet union 12.

Said seat is designed to enter into contact with a membrane valve element 20 which has a cup-shaped form, with the central closing part 20a being thicker and the thinner side wall 20b having a peripheral edge 21 directed outwards and suitable for insertion in a corresponding groove 15 of the valve body.

The outer edge 21 of the valve element is axially fixed in position by means of a cup-shaped cap 50 which has an internal and coaxial, cylindrical, guide wall 51 with a diameter such as to define with the side surface 52 of the cap a housing 53 placed in communication with a space at the top of the cap via one or more holes 54 and able to allow the insertion of a spring 40 and a part of a bush 30 for supporting the valve element, these being described below.

The cap 50 has on its outer surface tongues 56 extending circumferentially in a discontinuous manner and directed outwards so as to be able to be inserted - by means of resilient deformation at the time of assembly in the axial direction of the valve - inside a corresponding seat 16 formed as an undercut in the body 10 of the valve and so as to fix in position axially the entire assembly described above.

In the discontinuous zones of the tongues 56 the cap 50 has axially extending ribs 58 from which one or more radial reliefs 59 project radially, said reliefs being able, during assembly, to be inserted inside suitable seats 19 formed in the top of the body 10.

The number of these seats 19 may be equal to or greater than the number of said reliefs 59 depending on the technology used for formation thereof.

Said bush 30 has a socket-like form provided with an outer guide surface 31 which is generally cylindrical, with a bottom wall 32 intended to be applied against the end portion 20a of the valve element 20 and with an axially extending guide stem 33.

The latter is preferably hollow, with an outer guide surface 33a, and has one end in the form of a resilient fork 34 with locking teeth 34a.

The said spring 40 is a pressure spring which is coaxially seated between the cap 50 and the bush 30 so as to press against the bush in order to keep the membrane valve element 20 pressed against the valve seat 14.

A knob 60 is provided above the cap 50, being coaxially engaged onto the cap 50 and having a recessed transverse wall 61 with which the fork 34 of the stem 33 snap-engages.

The knob 60 also has, in its bottom part, in the positions shown in the figures, a cam 65 which acts on said ribs 58 present on the outer side surface of the cap 50 so as to allow manual operation as will emerge more clearly below.

A plate 62, for closing the knob at the top, preferably shows information regarding the dimensions, calibration and type-approval of the valve.

Calibration of the valve is performed during assembly and depends exclusively on the dimensions of the seat 14, the membrane 20, the bush 30, the cap 50 and the characteristics of the spring 40.

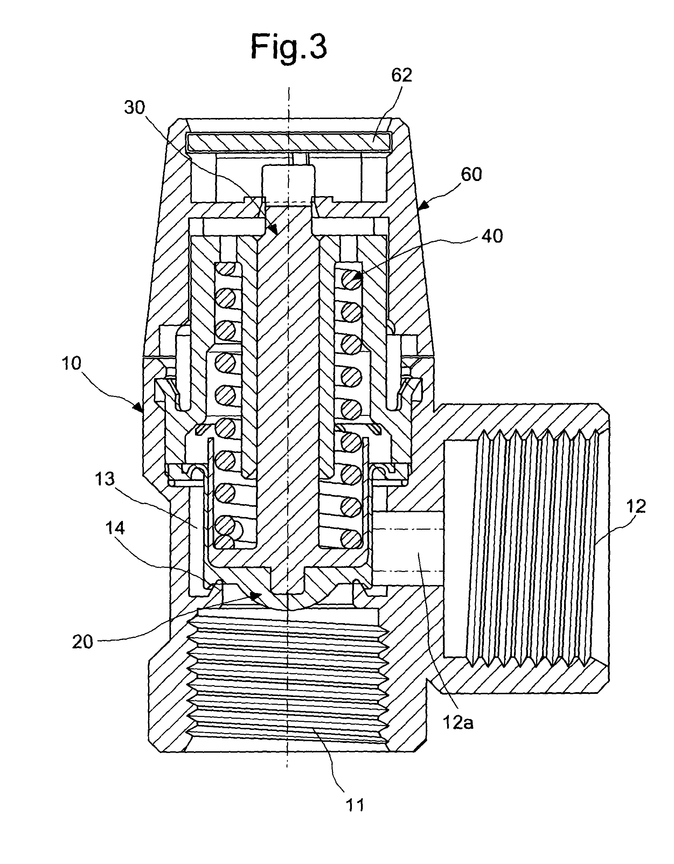

With the structure described above the operating principle of the valve is as follows (see Fig. 3):
- when the union 11 is subject to a pressure indicated by P, lower than the calibration pressure, the spring 40 presses the bush 30 and therefore the valve element 20 against the seat 14 and, prevailing over the thrust resulting from the pressure of the fluid, prevents communication between the union 11 of the pipe and the discharge union 12;
- when, inside the pipe connected to the union 11, the pressure P exceeds the calibration pressure, the pressure raises the valve element 30 along the longitudinal axis X-X against the force of the spring 40 and opens a passage towards the discharge union 12. The movement of the valve element 30 between the closed position and the open position and vice versa is guided by the mutual contact of the inner surface 51a of the guide 51 and the outer surface 33a of the stem 33;
- when it is required to perform manual discharging, the knob 60 is operated, causing it to rotate in an anti-clockwise direction, rotation in the other direction being prevented by the interference with the ribs 58 of the axial surfaces situated at the end of the cams 65;
- the cam 65 which presses against the ribs 58 present on the outer side surface of the cap 50 causes, during rotation, raising in the axial direction of the knob which moves together with it, during its upwards travel, the bush 30 and the valve element 20, thus allowing opening of the aperture 14 and consequent discharging of the overpressure from the pipe 11;
- once rotation has been completed the cam structure of the knob 60 and the recall force of the spring 40 allow automatic closing again of the valve when the knob is released by the user.

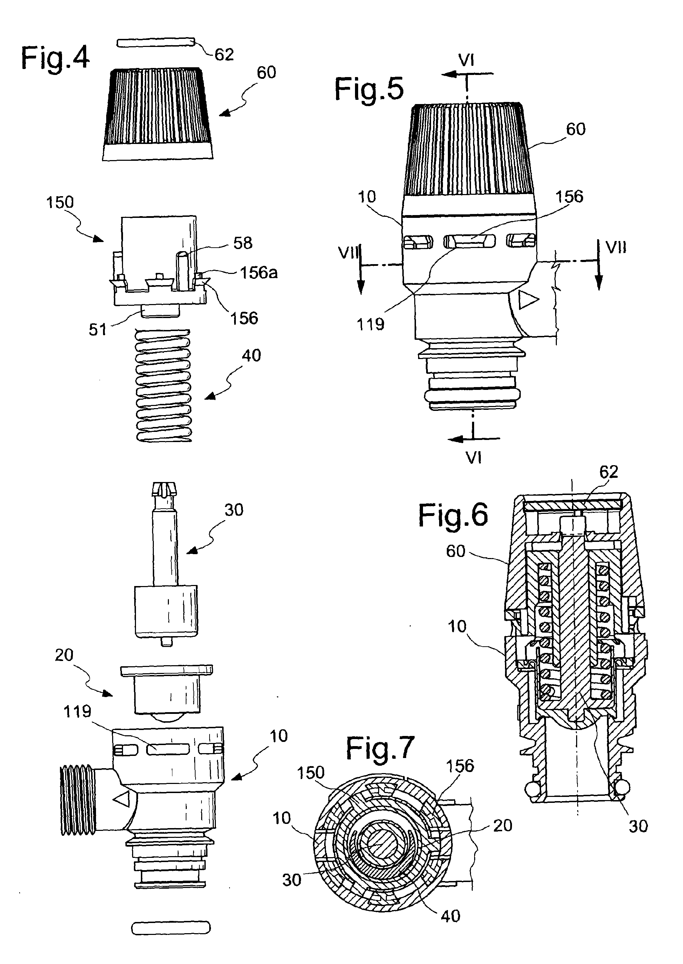

As shown in Figs. 4-7, a further embodiment of the valve according to the present invention envisages that the cap 150 has discontinuous tongues 156 along the circumference which, when the cap enters in the axial direction inside the valve body, are able to engage with corresponding seats formed in the said valve body.

An example of embodiment of said seats is represented by the eyelets 119 which are open on the side surface of said valve body.

With this embodiment it is possible to achieve further advantages which may be summarised as follows:
- possibility of producing easily the valve body by means of a more economical moulding process using moulds without unscrewing and without undercuts so that they are in turn more economical and function with shorter cycle times (= reduced production costs);
- possibility of achieving simultaneously compression of the spring and non-rotation of the cap by means of insertion of the resilient tongues 156 of the cap inside the eyelets 119.

It is envisaged, moreover, that the resilient tongues may be provided with vertical blocks which prevent the said tongues from being able to move too far outwards in order to prevent excessive yielding of the tongue outwards which would result in failed engagement between body and cap with a consequent reduction in the calibration of the spring due to the increased length thereof.

It is therefore clear how with the valve according to the present invention it is possible to provide a bleeder valve for overpressures in a pressurised-fluid pipe in a simple, low-cost and reliable manner, said valve also being equipped with reliable and repeatable manual operation means.

## Claims

1. Safety membrane valve comprising:
- a body (10) with a first union (11) for connection to a pipe to be protected against overpressures and a second discharge union (12), said unions communicating with each other by means of a valve seat (14) coaxial with said first union (11) and an aperture (12a) coaxial with the second union (12);
- a membrane valve element (20) housed inside a respective seat (13) of the body (10) and movable coaxially with respect to the first union (11) from a closed position, in contact with said seat (14), into an open position raised from said seat (14) for opening thereof;
- a longitudinal guide bush (30) for said valve element (20);
- a pressure cap (50) acting on said valve element (20);
- a spring (40) acting between said bush (30) and said cap (50) so as to press the valve element (20) against the seat (14);
**characterized in that**
said cap (50;150) has outwardly directed tongues (56;156) extending circumferentially with discontinuity and resiliently deformable in the radial direction, said tongues being suitable for insertion inside respective annular seats (16;119) of the valve body (10) for axial locking of the cap (50).

2. Valve according to Claim 1, **characterized in that** said seat (16) of the valve body (10) is a continuous annular depression formed as a undercut which is outwardly closed.

3. Valve according to Claim 1, **characterized in that** said seats (116) of the valve body (10) are formed by a plurality of eyelets (119) which are open outwards in the transverse direction on the side surface of the said valve body.

4. Valve according to Claim 3, **characterized in that** said tongues (156) of the cap (150) have means (156a) for preventing deformation.

5. Valve according to Claim 2 or 3, **characterized in that** it has ribs (58) extending axially in discontinuous zones of the tongues (56) and able to cooperate with a corresponding cam (65) of the manual operation knob (60) of the valve.

6. Valve according to Claim 5 when dependent upon Claim 2, **characterized in that** said ribs (58) have at least one radial relief (59) able to be inserted inside suitable seats (19) which are open axially in the top of the body (10).

7. Valve according to Claim 6, **characterized in that** the number of said seats (19) in the valve body is greater than or equal to the number of the reliefs (59).

8. Valve according to Claim 1, **characterized in that** said membrane valve element (20) has a cup-shaped form, with the central closing part (20a) being thicker and the thinner side wall (20b) having a peripheral edge (21) directed outwards and suitable for insertion inside a corresponding groove (15) of the valve body.

9. Valve according to Claim 1, **characterized in that** said bush (30) has a socket-like provided with an outer guide surface (31) which is generally cylindrical, with a bottom wall (32) able to enter into contact against the end portion (20a) of the valve element (20) and with an axially extending guide stem (33).

10. Valve according to Claim 9, **characterized in that** said guide stem (33) is hollow, with an outer guide surface (33a), and has a resilient fork-shaped end (34) with locking teeth (34a) able to engage with a corresponding surface of the cap (50).

11. Valve according to Claim 1, **characterized in that** said cap (50) has a cup-shaped form with an inner and coaxial, cylindrical, guide wall (51) having a diameter such as to define a seat (53) with the side surface (52) of the cap.

12. Valve according to Claim 11, **characterized in that** said seat (53) is placed in communication with a space at the top of the cap by means of one or more holes (54) able to allow the insertion of a spring (40) and a part of a bush (30).

13. Valve according to Claim 1, **characterized in that** said knob (60) has an upper closing plate (62) showing information relating to the characteristics of the valve.
